# EUROPEAN PATENT SPECIFICATION

(11) **EP 2 326 463 B1**
(45) Date of publication and mention of the grant of the patent: **28.03.2012**
(21) Application number: 09790630.9
(22) Date of filing: 20.07.2009
(51) Int. Cl.: B25B 15/00

(54) **A COMBINATION DRIVING TOOL FOR PHILLIPS AND ROBERTSON FASTENERS**
KOMBINATIONSANTRIEBSWERKZEUG FÜR PHILLIPS- UND ROBERTSON-SCHLÜSSEL
MANDRIN DE POSE ET DE DÉPOSE COMBINÉ POUR DISPOSITIFS DE FIXATION CRUCIFORME ET À TÊTE CARRÉE CREUSE

(30) Priority: 15.08.2008 US 89337 P
(43) Date of publication of application: 01.06.2011
(73) Proprietor: Robert Bosch GmbH, 70442 Stuttgart (DE)
(72) Inventor: PCHOLA, Edward, Chicago, IL 60614 (US); OSBERG, Kenneth C., Lake in the Hills, IL 60156 (US); DOST, Hagan Walter, Chicago, IL 60641 (US); NACHTIGALL, Wade, Chicago, IL 60634 (US); MARKWALD, Jonathan, Elmhurst, IL 60126 (US)
(74) Representative: Barth, Stephan Manuel
(86) International application number: PCT/US2009/051127
(87) International publication number: WO 2010/019352

(56) References cited:
- WO-A1-2004/065802
- WO-A1-2006/130490
- US-A- 2 182 568
- US-B1- 6 289 775

## Description

### BACKGROUND ART

The present invention generally relates to a driving bit as per the preamble of claim 1. An example of such a bit is disclosed by US 2 182 568 A.

It is well known that there are many different threaded fasteners and screws that have different types of recesses or outer surface configurations that can be driven by drivers that can vary from driver bits that are held in sockets of pneumatic or electric motor driven tools or merely have the handle for a user to manually rotate the fastener to tighten or loosen the same.

Various configurations include the standard slot screws, as well as recesses of various other configurations, such as star, lobed and hex head recesses, for example. Perhaps the most prevalent recess configurations other than the single slotted configuration are the standard Phillips head which is a cross slotted configuration and a Robertson configuration which has a square recess.

Drivers have been designed and commercialized which are capable of driving more than one configuration of a threaded fastener, such as a slotted head and a Phillips head. Such combination drivers can be convenient for a user if the combination can effectively engage more than one type of head configuration, because a single driver rather than multiple ones can be used.

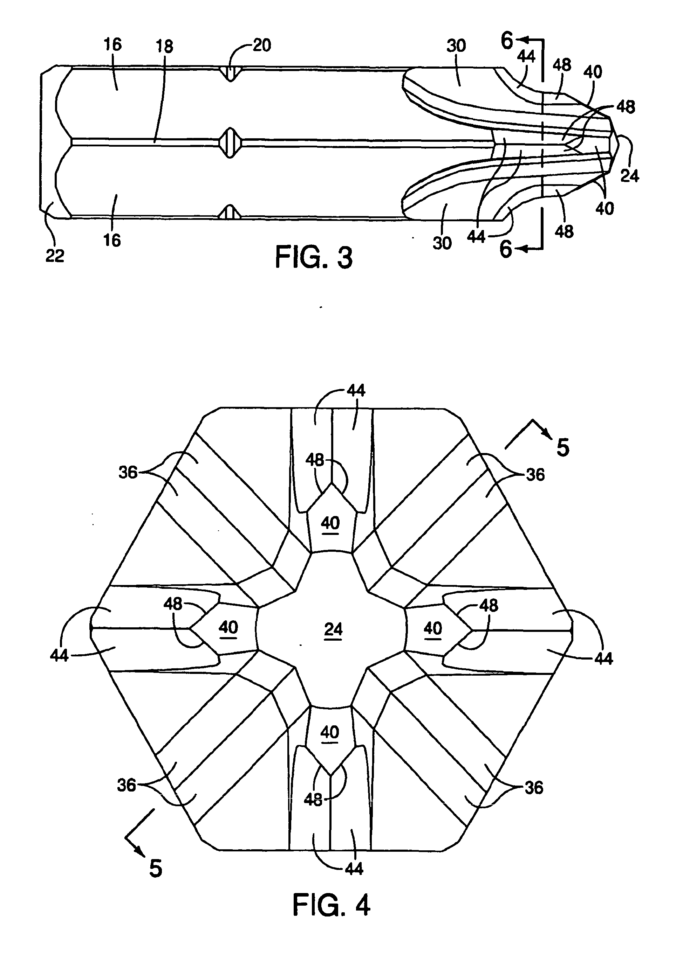

Aside from the conventional single slotted screws, the most popular configuration for screws is the Phillips head screws as well as the Robertson screws. The recess of the Phillips head is the well known cross slotted configuration which is defined by ISO standard 8764-2004(E), and is shown in the inspection gauge of fig. 3 thereof, which is specifically incorporated by reference herein. The Phillips head recess does not experience the easy disengagement of the screwdriver as compared to a single slotted head because the bit is captured on all sides within the recess. The Robertson recess is defined in the Draft revision ASME B 13.6.3 2002 standard for type III pan head machine screws, and also specifically incorporated by reference herein. The Robertson configuration square recess also captures the driver on all sides.

A combination driver that is effective to drive both Phillips head screws and Robertson screws would be highly desirable and is not known to be commercially available.

### DISCLOSURE OF INVENTION

The invention consists of a driving bit having the features of claim 1, that comprise a shank portion, and a working portion, wherein the working portion is configured to drive either a Phillips head fastener or a Robertson head fastener.

### BRIEF DESCRIPTION OF THE DRAWINGS

FIGURE 1 is a perspective view of a preferred embodiment of a combination bit that is capable of driving both Phillips head and Robertson head screws and fasteners;
FIG. 2 is an enlargement of a tip or working portion of the combination bit shown in FIG. 1;
FIG. 3 is a plan view of the combination bit shown in FIG. 1;
FIG. 4 is an end view of the tip portion of the combination bit shown in FIGS. 1;
FIG. 5 is a cross section taken generally along the line 5-5 of FIG. 4;
FIG. 6 is a cross section taken generally along the line 6-6 of FIG. 3;
FIG. 7 is a perspective view of an alternative embodiment of a combination bit that is capable of driving both Phillips head and Robertson head screws and fasteners;
FIG. 8 is a side plan view of the alternative combination bit shown in FIG. 7;
FIG. 9 is a end view of the tip portion of the combination bit shown in FIGS. 7; and
FIG. 10 is a cross section taken generally along the line 10-10 of FIG. 9.

### BEST MODE OF CARRYING OUT THE INVENTION

Two embodiments of the present invention are shown in the drawings, both of which are directed to a combination bit that is capable of driving threaded fasteners and screws that have a Phillips head portion or a Robertson head portion. The drawings all show a combination bit that has a hexagonal shank which is configured to be held in a socket of some type of tool which may be a manual screwdriver with a screwdriver handle, or it may fit in a socket that is a part of a pneumatic driven wrench or an electrically driven tool or other type of tool. It should be understood that while a manual handle is not shown in the drawings, the shank of the bits that are illustrated could be a long shaft attached to a handle with a working portion or tip that is configured to drive the Phillips head or Robertson head screws or other fasteners.

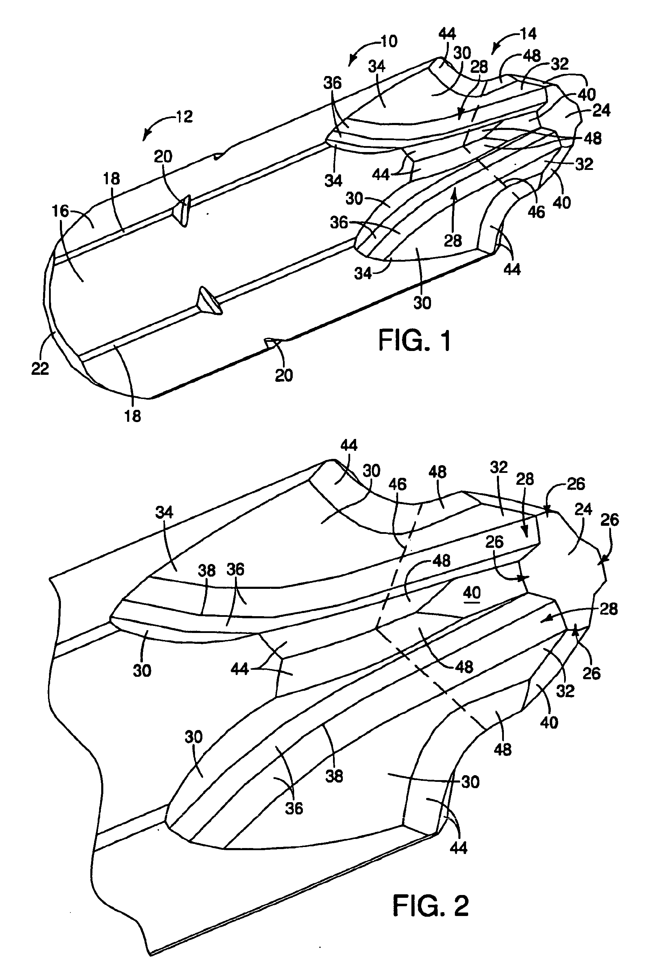

Turning now to the drawings, and particularly FIG. 1, the combination bit is indicated generally at 10 and includes a shank portion, indicated generally at 12 and a working portion or tip indicated generally at 14. While the shank portion 12 may have any one of many different configurations, including a cylindrical shape, it is preferred that it have a hexagonal cross section with six flat faces 16 with adjacent faces having a narrow flat portion 18 at the intersection thereof. It is also preferred that the flat portions have notches 20 for interfacing with a quick connect adaptor which secures the bit in a socket tool. The outer circumference 22 of the free end of the shank portion 12 is chamfered to facilitate easy insertion of the bit into a suitable socket. While other configurations for the shank portion 12 can be used, the illustrated shank is preferably a standard insert bit shank per DIN 3126 form C6.3.

Turning now to the working portion 14, it has a slightly conical end surface 24 with a generally cross shape, with rib portions, indicated generally at 26, each of which is oriented in a substantially 90° relative to adjacent ribs, with each of the ribs 26 being separated by elongated major flutes, indicated generally at 28, which extend from the end surface 24 toward the shank portion 12 and gently curve outwardly to the surface. As is best shown in FIG. 2, each of the ribs has side walls 30 on opposite side portions that extend from a front location 32 where it terminates at the end surface 24 to the other end where it terminates near the outer surface of the shank portion 12 as identified at 34. The side walls 30 are generally planar with the distance between the walls being generally slightly smaller than the width of the slots in a Phillips head configuration recess.

The flutes 28 also have a. bottom trough section that is generally shown to have trough side portions 36 as well as a center bottom line 38. It should be understood that the drawings are line drawings are slightly exaggerated for the sake of clarity. In this regard it should be understood that the two trough side portions 36 as well as the center bottom line 38 may be curved relative to one another and the interface between the side walls 30 and the trough side portions 36 may also be gently curved, which smoothing is consistent with the actual shape of many Phillips head screwdriver tips.

With regard to the ribs 26, they extend from the end surface 24 to the shank portion 12 and have an angled flat face 40 that is approximately at an angle of 26° relative to a longitudinal center axis 42 of the bit. The flat face 40 extends to a pair of side panels 44 which gently curve to terminate at an approximately 26° angle relative to the face 16 of the shank portion.

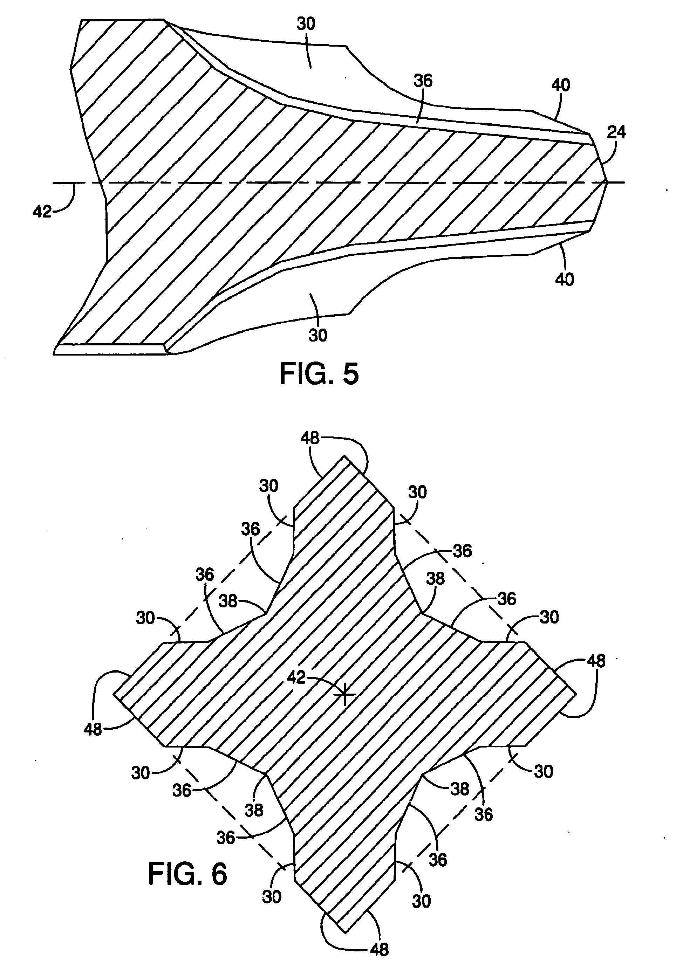

Importantly, a dotted line 46 identifies a transition portion where the side panels 44 on the transition portion extends toward the tip end surface 24 is essentially planar and tapered inward toward the center axis 42 of the bit 10 at an approximate angle of 2.5 degrees. The side panels 44 then curve outwardly as shown in FIGS. 1 and 2 as they extend to the shank portion flat faces 16. Thus, the segments between the line 46 and the conical face 40, identified at 48, present planar segments that are parallel to the center axis 42 and substantially perpendicular to one another in the axial direction, as can be seen in the cross section shown in FIG. 6. These panel segments 48 of each of the four ribs 26 form a square as shown in FIG. 6 which is slightly smaller than the recess of a Robertson head fastener. Thus, the geometry is such that the panel segments 48 are oriented to contact the inside surfaces of the recess for driving a Robertson screw or fastener.

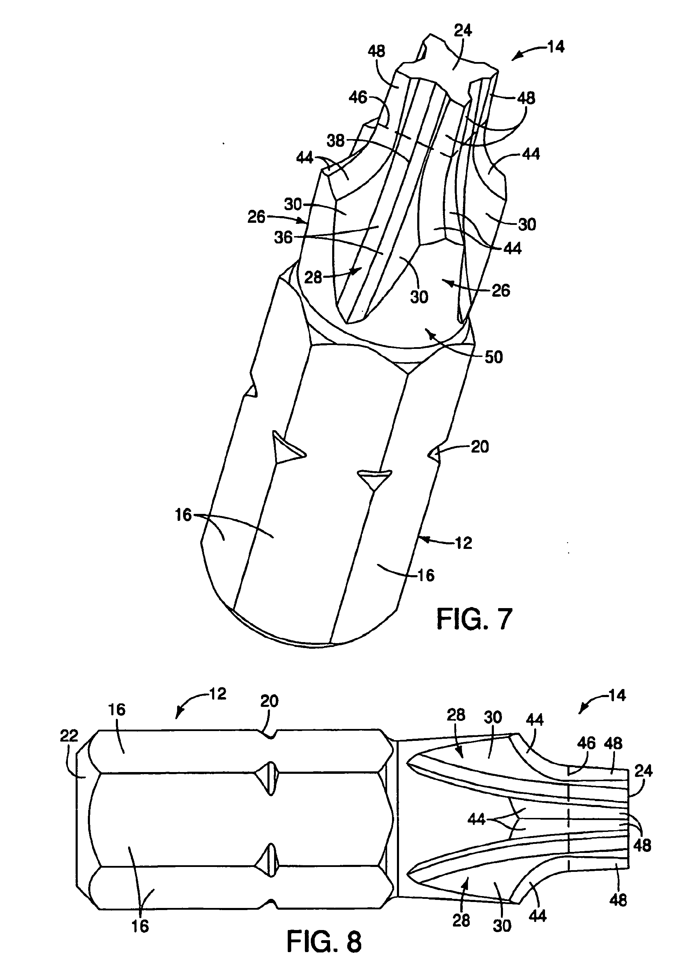

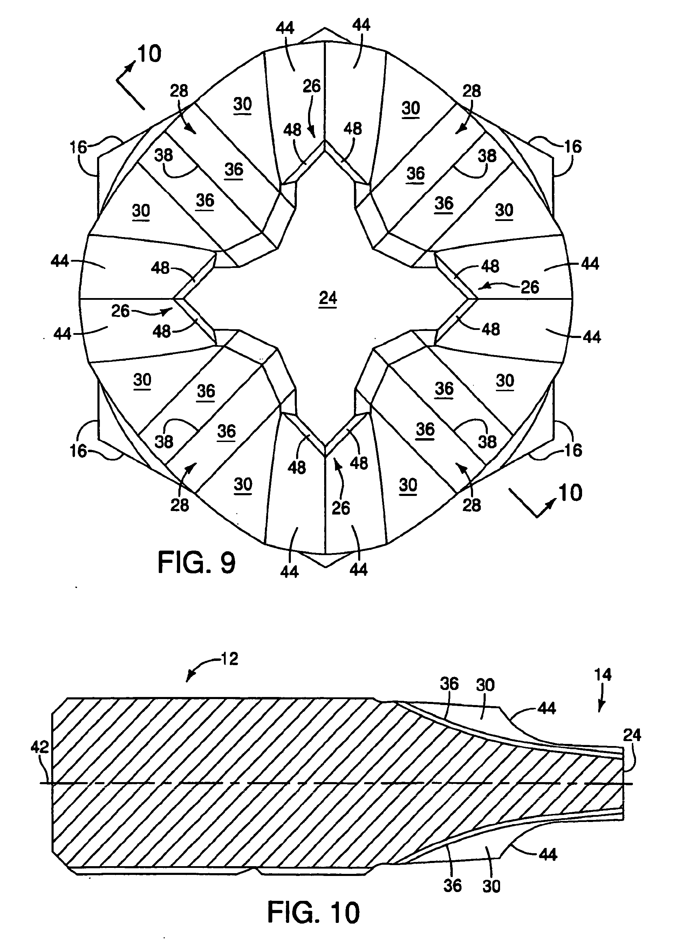

Turning now to an alternative embodiment of the present invention and referring to FIGS. 7-10, another combination bit is shown which is also configured to drive a Phillips head fastener as well as a Robertson fastener. It should be understood that the reference numbers that have been applied to the first preferred embodiment are repeated for corresponding surfaces and shapes in the alternative embodiment, but slight differences in the configuration will be apparent. The major differences are that the working portion 14 has a base portion, indicated generally at 50, which is cylindrical in shape so that there is a transition from the circular base portion 50 to the hexagonal shank portion 12 that is not present in the embodiment shown in FIGS. 1-6. Therefore, the flutes 28 terminate in the cylindrical base portion 50 rather than in the sides faces 16 of the hexagonal shank portion. The tip or working portion 14 as shown in FIGS. 7-10 is also more severely truncated in that the end surface 24 has a larger surface area and in fact approximates the size of the transition portion 46 to present a greater surface area for the panel segments 48 that engage the interior walls of the Robertson cubic recess.

By truncating the outer tip so that the end surface is larger than that shown in FIGS. 1-6, the angled faces 48 are eliminated. However, the depth represented by the distance between the end surface 24 and the transition line 46 can still be inserted into the corresponding Phillips head fastener recess so that greater purchase can be obtained to drive the Phillips head fastener. Because of the greater surface area of the contact surfaces represented by the panel segments 48, the alternative embodiment tends to favor driving the Robertson head fastener whereas the embodiment shown in FIGS. 1-6 tends to favor the driving of a Phillips head fastener. It should be understood that a balance between the effectiveness of driving each type of fastener can be varied by the degree to which the tip is varied as demonstrated by the two alternatives shown in the drawings of the present application.

While various embodiments of the present invention have been shown and described, it should be understood that other modifications, substitutions and alternatives are apparent to one of ordinary skill in the art. Such modifications, substitutions and alternatives can be made without departing from the invention, which should be determined from the appended claims.

Various features of the invention are set forth in the following claims.

## Claims

1. A driving bit for driving either a Robertson head fastener or a Phillips head fastener, comprising:
a shank portion (12);
a bit portion, the outer end surface of which defines a symmetrical cross head configuration for insertion into a Phillips head fastener;
said bit portion having four ribs (26) and four flutes (28) that alternate with one another and extend from said outer end surface longitudinally toward said shank portion (12), **characterized by**,
said flutes (28) curving generally outwardly away from a center longitudinal axis to a first outer surface longitudinal position on said bit where they terminate;
said ribs (26) being defined by said adjacent flutes, each rib (26) having a predetermined width and a transition portion extending from at least near said outer end surface to at least a first predetermined distance, said transition portion having two symmetrical side panels that interface one another at a generally 90 degree angle, so that said side panels of all four ribs (26) define a square configuration that can drive a Robertson head fastener when said bit is inserted into the same.

2. The driving bit as defined in claim 1 wherein said predetermined width is slightly smaller than the width of recesses that define the cross slots of a Phillips head.

3. The driving bit as defined in claim 1 wherein said bit portion extends from said outer end surface to said predetermined distance, said predetermined distance generally corresponding to the depth of a recess of a Robertson head fastener.

4. The driving bit as defined in claim 1 wherein said side panels are substantially parallel to said center longitudinal axis.

5. The driving bit as defined in claim 1 wherein said first position is on said shank portion (12) of said bit.

6. The driving bit as defined in claim 1 wherein said bit portion has a generally cylindrical base portion (50) merging with said shank portion (12).

7. The driving bit as defined in claim 6 wherein said ribs curve outwardly from said center longitudinal axis beyond said first predetermined distance from said outer end surface.

8. The driving bit as defined in claim 1 wherein said ribs curve outwardly from said center longitudinal axis beyond said first distance from said outer end surface.

9. The driving bit as defined in claim 1 wherein each rib has a flat portion extending from said outer end surface outwardly at a predetermined angle and extends to a second outer surface longitudinal position.

10. The driving bit as defined in claim 9 wherein said predetermined angle is approximately 26 degrees relative to said center longitudinal axis.

11. The driving bit as defined in claim 9 wherein said second position is a second distance that is less than said first predetermined distance.

12. The driving bit as defined in claim 11 wherein said second position is on said shank portion (12).

13. The driving bit as defined in claim 1 wherein said first predetermined distance enables said bit to be inserted into a Robertson head so that said flat side panels have substantial contact with the cubic recess of a Robertson head to drive the same.

14. The driving tool as defined in claim 1 wherein the width of said ribs increases beyond said first predetermined distance in a direction toward said shank portion.

15. The driving tool as defined in claim 1 wherein said outer end surface of said bit portion is configured to have a truncated tip.

## Patentansprüche

1. Antriebsspitze zum Antreiben eines Robertson- oder eines Phillips-Schraubenschlüssels, aufweisend:
einen Schaftabschnitt (12);
einen Spitzenabschnitt, dessen äußere Endfläche eine symmetrische Kreuzkopfkonfiguration zum Einsetzen in einen Phillips-Schraubenschlüssel definiert;
wobei der Spitzenabschnitt abwechselnd vier Rippen (26) und vier Nuten (28) aufweist, die sich von der äußeren Endfläche längs zum Schaftabschnitt (12) erstrecken,
**dadurch gekennzeichnet, dass**
sich die Nuten (28) im Allgemeinen nach außen weg von einer Mittellängsachse zu einer ersten Außenflächen-Längsposition auf der Spitze krümmen, wo sie enden;
die Rippen (26) durch die angrenzenden Nuten begrenzt sind, wobei jede Rippe (26) eine vorbestimmte Breite und
einen Übergangsabschnitt aufweist, der sich zumindest von nahe der äußeren Endfläche zumindest über einen ersten vorbestimmten Abstand erstreckt, wobei der Übergangsabschnitt zwei symmetrische Seitenwände aufweist,
die miteinander in einem Winkel von im Allgemeinen 90 Grad verbunden sind, so dass die Seitenwände aller vier Rippen (26) eine quadratische Konfiguration definieren, die einen Robertson-Schraubenschlüssel antreiben kann, wenn die Spitze in diesen eingesetzt ist.

2. Antriebsspitze nach Anspruch 1, wobei die vorbestimmte Breite ein wenig kleiner ist als die Breite von Ausnehmungen, die die Kreuzschlitze einer
Phillipsschraube definieren.

3. Antriebsspitze nach Anspruch 1, wobei sich der Spitzenabschnitt über den vorbestimmten Abstand von der äußeren Endfläche erstreckt, wobei der vorbestimmte Abstand im Allgemeinen der Tiefe einer Ausnehmung eines Robertson-Schraubenschlüssels entspricht.

4. Antriebsspitze nach Anspruch 1, wobei die Seitenwände im Wesentlichen parallel zu der Mittellängsachse sind.

5. Antriebsspitze nach Anspruch 1, wobei sich die erste Position auf dem Schaftabschnitt (12) der Spitze befindet.

6. Antriebsspitze nach Anspruch 1, wobei der Spitzenabschnitt einen im Allgemeinen zylindrischen Grundabschnitt (50) aufweist, der mit dem Schankabschnitt (12) vereinigt ist.

7. Antriebsspitze nach Anspruch 6, wobei sich die Rippen nach außen von der Mittellängsachse über den ersten vorbestimmten Abstand von der äußeren Endfläche hinaus krümmen.

8. Antriebsspitze nach Anspruch 1, wobei sich die Rippen nach außen von der Mittellängsachse über den ersten vorbestimmten Abstand von der äußeren Endfläche hinaus krümmen.

9. Antriebsspitze nach Anspruch 1, wobei jede Rippe einen flachen Abschnitt aufweist, der sich von der äußeren Endfläche um einen vorbestimmten Winkel nach außen erstreckt und sich zu einer zweiten Außenflächen-Längsposition erstreckt.

10. Antriebsspitze nach Anspruch 9, wobei der vorbestimmte Winkel in etwa 26 Grad relativ zu der Mittellängsachse beträgt.

11. Antriebsspitze nach Anspruch 9, wobei die zweite Position ein zweiter Abstand ist, der kleiner ist als der erste vorbestimmte Abstand.

12. Antriebsspitze nach Anspruch 11, wobei die zweite Position auf dem Schaftabschnitt (12) liegt.

13. Antriebsspitze nach Anspruch 1, wobei es der erste vorbestimmte Abstand ermöglicht, die Spitze in eine Robertson-Schraube einzusetzen, so dass die flachen Seitenwände im Wesentlichen im Kontakt mit der kubischen Ausnehmung einer Robertson-Schraube zum Antrieb dieser stehen.

14. Antriebswerkzeug nach Anspruch 1, wobei die Breite der Rippen über den ersten vorbestimmten Abstand hinaus in eine Richtung zum Schaftabschnitt zunimmt.

15. Antriebswerkzeug nach Anspruch 1, wobei die äußere Endfläche des Spitzenabschnitts so konfiguriert ist, dass sie ein kegelstumpfartiges Ende aufweist.

## Revendications

1. Embout d'entraînement pour entraîner soit une fixation à tête Robertson, soit une fixation à tête Phillips, comprenant :
une partie de tige (12) ;
une partie d'embout, dont la surface d'extrémité extérieure définit une configuration de tête cruciforme symétrique pour l'insertion dans une fixation à tête Phillips ;
ladite partie d'embout possédant quatre nervures (26) et quatre cannelures (28) qui alternent les unes avec les autres et s'étendent à partir de ladite surface d'extrémité extérieure longitudinalement vers ladite partie de tige (12),
**caractérisé par le fait que**,
lesdites cannelures (28) se courbent globalement vers l'extérieur en s'éloignant d'un axe central longitudinal vers une première position longitudinale de surface extérieure sur ledit embout où elles se terminent ;
lesdites nervures (26) étant définies par lesdites cannelures adjacentes, chaque nervure (26) ayant une largeur prédéterminée et une partie de transition s'étendant à partir d'au moins un emplacement situé à proximité de ladite surface d'extrémité extérieure jusqu'à au moins une première distance prédéterminée,
ladite partie de transition ayant deux pans latéraux symétriques qui s'interfacent l'un avec l'autre à un angle de sensiblement 90 degrés, de sorte que lesdits pans latéraux de l'ensemble des quatre nervures (26) définissent une configuration carrée qui peut entraîner une fixation à tête Robertson lorsque ledit embout est inséré dans celle-ci.

2. Embout d'entraînement tel que défini dans la revendication 1, dans lequel ladite largeur prédéterminée est légèrement inférieure à la largeur des évidements qui définissent l'empreinte cruciforme d'une tête Phillips.

3. Embout d'entraînement tel que défini dans la revendication 1, dans lequel ladite partie d'embout s'étend à partir de ladite surface d'extrémité extérieure jusqu'à ladite distance prédéterminée, ladite distance prédéterminée correspondant globalement à la profondeur d'un évidement d'une fixation à tête Robertson.

4. Embout d'entraînement tel que défini dans la revendication 1, dans lequel les pans latéraux sont sensiblement parallèles audit axe central longitudinal.

5. Embout d'entraînement tel que défini dans la revendication 1, dans lequel ladite première position se situe sur ladite partie de tige (12) dudit embout.

6. Embout d'entraînement tel que défini dans la revendication 1, dans lequel ladite partie d'embout possède une partie de base globalement cylindrique (50) fusionnant avec ladite partie de tige (12).

7. Embout d'entraînement tel que défini dans la revendication 6, dans lequel lesdites nervures se courbent vers l'extérieur par rapport audit axe central longitudinal au-delà de ladite première distance prédéterminée à partir de ladite surface d'extrémité extérieure.

8. Embout d'entraînement tel que défini dans la revendication 1, dans lequel lesdites nervures se courbent vers l'extérieur par rapport audit axe central longitudinal au-delà de ladite première distance à partir de ladite surface d'extrémité extérieure.

9. Embout d'entraînement tel que défini dans la revendication 1, dans lequel chaque nervure possède une partie plate s'étendant vers l'extérieur à un angle prédéterminé à partir de ladite surface d'extrémité extérieure, et s'étend jusqu'à une seconde position longitudinale de surface extérieure.

10. Embout d'entraînement tel que défini dans la revendication 9, dans lequel ledit angle prédéterminé est d'environ 26 degrés par rapport audit axe central longitudinal.

11. Embout d'entraînement tel que défini dans la revendication 9, dans lequel ladite seconde position est une seconde distance qui est inférieure à ladite première distance prédéterminée.

12. Embout d'entraînement tel que défini dans la revendication 11, dans lequel ladite seconde position se situe sur ladite partie de tige (12).

13. Embout d'entraînement tel que défini dans la revendication 1, dans lequel ladite première distance prédéterminée permet audit embout d'être inséré dans une tête Robertson de telle sorte que lesdits pans latéraux plats ont un contact substantiel avec l'évidement cubique d'une tête Robertson pour entraîner celle-ci.

14. Outil d'entraînement tel que défini dans la revendication 1, dans lequel la largeur desdites nervures augmente au-delà de ladite première distance prédéterminée dans une direction vers ladite partie de tige.

15. Outil d'entraînement tel que défini dans la revendication 1, dans lequel ladite surface d'extrémité extérieure de ladite partie d'embout est configurée pour avoir un bout tronqué.
